# DEMANDE DE BREVET EUROPEEN

(11) **EP 0 933 617 A1**
(43) Date de publication de la demande: **04.08.1999**
(21) Numéro de dépôt: 99400124.6
(22) Date de dépôt: 20.01.1999
(51) Int. Cl.: G01D 5/22

(54) **Capteur magnétique inductif avec optimisation des matériaux de la cible**

(30) Priorité: 29.01.1998 FR 9801007
(71) Demandeur: CSEM Centre Suisse d'Electronique et de Microtechnique S.A., 2007 Neuchâtel (CH)
(72) Inventeur: De Coulon, Yves, 75116 Paris (FR)
(74) Mandataire: Ballot, Paul Denis Jacques

(57) **Abrégé**

L'invention concerne les cibles associées à des capteurs magnétiques inductifs de type différentiel.

L'invention réside dans le fait que la cible (12) comprend un disque (40) en un matériau conducteur tel que l'aluminium à la périphérie duquel sont disposés régulièrement des repères (42) en un matériau ferromagnétique. Par cette alternance devant les bobines réceptrices (16, 18) de surfaces ferromagnétiques qui attirent les lignes du champ magnétique et de surfaces conductrices qui les repoussent sous l'effet des courants de Foucault, le signal différentiel des bobines est très sensiblement augmenté.

L'invention est applicable aux capteurs de position, linéaire ou angulaire, ainsi que pour tout type de capteur inductif.

## Description

L'invention concerne les capteurs magnétiques inductifs du type planaire et à traitement différentiel et, plus particulièrement, dans ces capteurs la partie appelée cible sur laquelle sont disposés régulièrement les repères prévus pour être détectés par le capteur associé.

Les capteurs à induction magnétique du type planaire sont connus et sont par exemple décrits dans le brevet européen No. 08 05 339 et la demande de brevet français déposée le 7 avril 1997 sous le No. 97 04218. Un tel capteur inductif miniaturisé comprend au moins un enroulement primaire parcouru par un courant alternatif qui engendre un champ magnétique alternatif et au moins deux enroulements secondaires soumis à ce champ alternatif et connectés à des moyens de détection de manière différentielle, les enroulements primaire et secondaires étant planaires. Le flux du champ magnétique traversant chaque enroulement secondaire est modifié par le passage, devant les enroulements, d'une cible en un matériau conducteur ou ferromagnétique qui comporte une discontinuité de telle sorte qu'en mesurant la modulation d'amplitude ou de phase des signaux électriques induits dans les enroulements secondaires on détecte le passage de cette discontinuité, ce qui permet, par un traitement adapté des signaux électriques, de déterminer la position de la discontinuité sur la cible, son sens et/ou sa vitesse de déplacement.

Dans les documents précités, les capteurs opèrent avec une cible en un matériau donné présentant des dents qui définissent des discontinuités régulièrement espacées. Le matériau peut être soit un matériau conducteur, soit un matériau ferromagnétique, le choix dépendant de la fréquence utilisée. En effet, les matériaux conducteurs influencent le champ magnétique principalement à haute fréquence, tandis que pour les matériaux ferromagnétiques, l'influence est plus importante dans les fréquences basses. Les capteurs connus, utilisant un principe de détection différentielle, mesurent l'influence de la présence d'une dent en regard d'une première bobine réceptrice par rapport au signal reçu par une deuxième bobine réceptrice non influencée par la cible. En d'autres termes, les bobines réceptrices et la cible sont prévues de façon que, lorsqu'une dent est en face d'une bobine réceptrice, l'autre bobine réceptrice soit en face d'un trou. La détection d'une cible dans un capteur de proximité, de position ou de mouvement selon le principe précédemment décrit, reste cependant difficile car, la variation du signal due à la présence d'une dent, est faible par rapport à la tension induite dans chaque bobine réceptrice indépendamment de la présence ou non de la cible.

Aussi un but de l'invention est un capteur magnétique de type inductif qui, associé à une cible adaptée, permet d'obtenir un signal différentiel d'amplitude plus élevée que dans les capteurs du même type de l'art antérieur.

Ce but est atteint par l'utilisation d'une cible, présentant alternativement des zones en un matériau conducteur et en un matériau ferromagnétique, associée à un capteur magnétique de type inductif comportant une bobine excitatrice, ou primaire, et au moins deux bobines réceptrices, ou secondaires, des moyens d'alimentation de la bobine primaire à une fréquence propre à assurer une réponse optimale sur les bobines secondaires, que celles-ci soient en regard d'une zone en un matériau conducteur ou en regard d'une zone en un matériau ferromagnétique, et un circuit de détection différentielle des signaux reçus sur les bobines secondaires.

L'utilisation de matériaux ferromagnétique et conducteur, associée au principe de détection différentielle, présente l'avantage supplémentaire que, comme les influences de ces matériaux sur la tension induite dans les bobines secondaires sont de signes opposés, le signal résultant de leur différentiation a une amplitude magnifiée.

Un autre avantage découlant du précédant est que le rapport S/N (rapport du signal sur le bruit) du signal détecté est amélioré; ce qui rend, par exemple, le capteur moins sensible aux variations de la distance entre les bobines secondaires et la cible.

D'autres caractéristiques et avantages de la présente invention apparaîtront à la lecture de la description suivante d'exemples particuliers de réalisation, ladite description étant faite avec les dessins joints dans lesquels :
- la figure 1 est une vue d'un capteur magnétique inductif associé à une cible selon l'invention,
- la figure 2 est une vue en coupe de la cible de la figure 1 suivant un diamètre passant par les repères ferromagnétiques,
- la figure 3 montre une variante d'une cible selon l'invention, et
- la figure 4 est un diagramme montrant la réponse du capteur en fonction des matériaux utilisés et de la fréquence d'excitation.

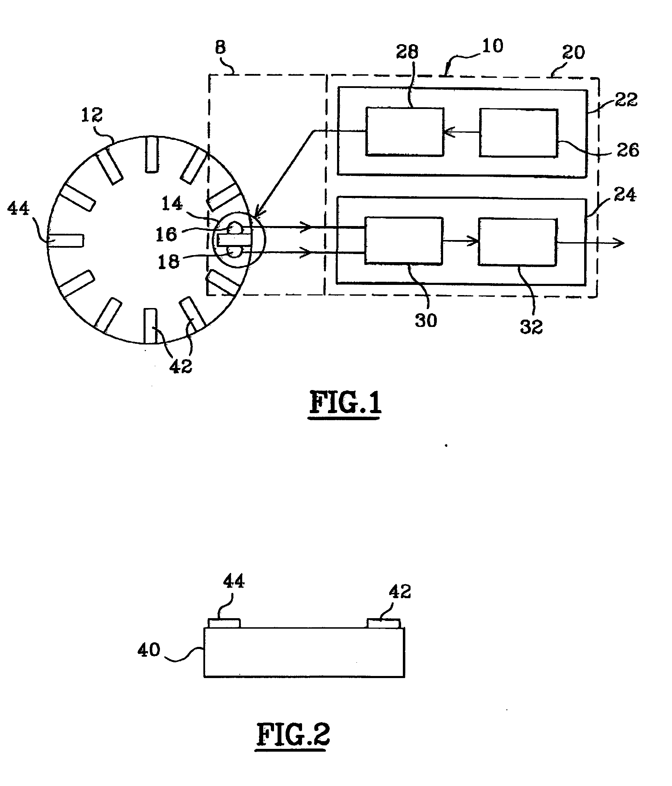

Sur la figure 1, un capteur magnétique inductif 10 est associé à une cible 12. Un tel capteur magnétique inductif miniaturisé comprend au moins un enroulement primaire 14 parcouru par un courant alternatif qui engendre un champ magnétique alternatif et au moins deux enroulements secondaires 16, 18 soumis à ce champ alternatif, les enroulements primaire et secondaires étant planaires.

Un tel capteur magnétique inductif est par exemple du type décrit en détail dans les documents précités. Pour faciliter la compréhension, les éléments principaux en sont rappelés ci-après.

Les bornes de sortie de l'enroulement primaire 14 et des deux enroulements secondaires 16, 18 sont connectées à un système électronique 20 qui comprend un dispositif électronique d'excitation 22 fournissant le courant alternatif à l'enroulement primaire excitateur et un dispositif électronique 24 de traitement des signaux électriques apparaissant aux bornes de sortie des enroulements secondaires récepteurs 16, 18.

Le dispositif électronique d'excitation 22 comprend essentiellement un oscillateur 26 dont le signal alternatif est amplifié dans un amplificateur 28 avant d'être appliqué aux bornes de sortie de l'enroulement primaire 14.

Le dispositif électronique de traitement 24 comprend essentiellement :
- un circuit d'amplification/démodulation 30 pour le couple d'enroulements secondaires 16, 18 connectés selon un principe de détection différentielle, et
- un circuit de traitement 32 des signaux démodulés.

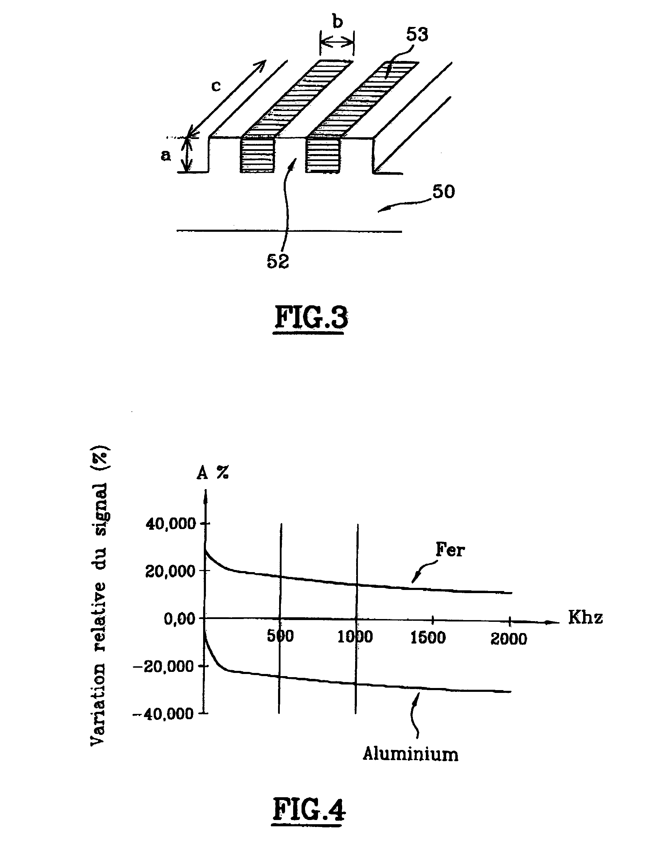

Selon un premier exemple de réalisation de l'invention, la cible 12 comprend un disque 40 en un matériau conducteur, sur lequel sont disposés des repères 42 en un matériau ferromagnétique. De manière connue, les matériaux conducteurs présentent une conductivité électrique élevée, alors que leur perméabilité magnétique relative µᵣ est faible, par exemple, égale à 1. Sous l'influence d'un champ magnétique à fréquence relativement haute (voir figure 4), des courants de Foucault sont engendrés dans le matériau avec pour effet de limiter la profondeur de pénétration des lignes du champ magnétique dans ledit matériau. Cette profondeur de pénétration δ s'exprime par la relation δ = (π.µ_{0.} µ_{r.}σ.f)^{1/2}, où f représente la fréquence de la tension alternative d'excitation, σ la conductivité du matériau (inverse de la résistivité), µᵣ sa perméabilité relative et µ₀ la perméabilité du vide. Parmi les matériaux conducteurs les plus utilisables on peut citer, à titre d'exemples non limitatifs, l'aluminium, le cuivre, l'or, l'étain et leurs composés. Les matériaux ferromagnétiques présentent une perméabilité relative élevée, de l'ordre de 100 à 10.000, alors que leur conductivité électrique est moyenne à faible.

Contrairement aux matériaux conducteurs, les matériaux ferromagnétiques "absorbent" les lignes du champ magnétique et ce, d'autant plus que la fréquence est basse. On peut citer, à titre d'exemples non limitatifs de matériaux ferromagnétiques, le fer, le nickel, l'acier, le µ-métal ou leurs composés.

Le diagramme de la figure 4 montre de manière schématique la réponse du capteur en fonction de la fréquence f de la tension d'excitation et du matériau de la cible. Ainsi cette réponse, représentée par la variation relative A du signal reçu par une bobine secondaire, croît (en valeur absolue) avec la fréquence dans le cas d'un matériau conducteur, tel l'aluminium, alors qu'elle décroît avec la fréquence dans le cas d'un matériau ferromagnétique, tel l'acier, le fer ou un alliage de fer et de nickel (FeNi). Dans le cas de l'utilisation de ces deux matériaux (Al et FeNi), la fréquence d'excitation pourra être choisie dans une gamme d'environ 500 kHz à 1 MHz, par exemple, 800 kHz. Pour cette fréquence, le disque 40 a, de préférence, une épaisseur au moins égale à 0.2 mm, soit environ deux fois la profondeur de pénétration 6 dans l'aluminium. Les repères 42 peuvent être réalisés par dépôt sélectif de FeNi par tout moyen approprié; leur épaisseur étant égale à 0.02 mm; ce qui correspond de nouveau à environ deux fois la profondeur de pénétration.

Comme cela a été mentionné précédemment et comme représenté à la figure 4, les signaux engendrés dans les bobines secondaires par les deux matériaux de la cible sont de signes opposés. Du fait du traitement différentiel, les contributions de ces signaux seront donc ajoutées, ce qui accroît la facilité et la sécurité de la détection de la cible.

D'autres formes et d'autres techniques peuvent être utilisées pour la réalisation de la cible. Ainsi pourra-t-on faire usage des techniques connues de gravure (par exemple par photolithographie), d'estampage et de dépôt (par voie chimique, électrochimique ou autres). La figure 3 montre un exemple de réalisation d'une cible longitudinale comportant un substrat 50 en aluminium, sur la partie supérieur duquel des dents 52 ont été gravées. Les intervalles entre les dents sont ensuite comblés à l'aide d'un matériau FeNi déposé par voie électrochimique. Les dimensions des dents sont telles que la hauteur a soit supérieure à la profondeur de pénétration, la largeur b égale au diamètre d'une bobine secondaire et la profondeur c égale ou supérieure à la dimension du capteur.

Un autre exemple de réalisation qu'il convient de mentionner pour sa simplicité de mise en oeuvre est l'application, par des moyens appropriés (par exemple par collage), d'une grille, dont les éléments forment des repères dans un matériau d'un premier type (conducteur ou ferromagnétique), sur un substrat formé dans un matériau d'un second type (ferromagnétique ou conducteur).

Il est, par ailleurs, évident que d'autres formes de cible que celles décrites ci-dessus pourront être utilisées en fonction de l'application envisagée. On pourra, par exemple, prévoir une cible constituée par un disque ne comportant qu'un seul repère; ce repère étant, conformément à l'invention, réalisé au moyen d'une première zone en un matériau conducteur adjacente à une deuxième zone en un matériau ferromagnétique. Une telle cible peut être utilisée lorsque l'on désire déterminer le nombre de tours effectué par un disque ou encore détecter le passage d'une position déterminée.

## Revendications

1. Capteur magnétique inductif du type comportant un enroulement primaire (14) alimenté par un courant alternatif d'excitation et au moins deux enroulements secondaires (16, 18) connectés à un circuit de détection différentielle soumis au champ magnétique alternatif créé par ledit enroulement primaire (14) et fournissant des signaux électriques modulés en amplitude représentatifs des variations du champ magnétique dues à la présence d'une cible (12) structurée associée, caractérisé en ce que ladite cible présente au moins deux zones successives alternativement en un premier matériau conducteur (52) et en un second matériau ferromagnétique (53) et en ce que la fréquence dudit courant alternatif d'excitation est choisie de manière que les signaux fournis par lesdits enroulements secondaires soient maximums pour lesdits premier et second matériaux.

2. Capteur selon la revendication 1, caractérisé en ce que ladite cible présente une succession régulière de zones alternativement en un premier matériau conducteur et en un second matériau ferromagnétique.

3. Capteur selon la revendication 1 ou la revendication 2, caractérisé en ce que la distance entre les centres des zones adjacentes de matériaux différents est égale au diamètre utile desdits enroulements secondaires.

4. Capteur selon l'une des revendications 1 à 3, caractérisé en ce que la cible est réalisée dans un substrat, conducteur ou ferromagnétique, et en ce que les zones en l'autre matériau sont rapportées sur ledit substrat.
